# EUROPEAN PATENT SPECIFICATION

(11) **EP 1 314 621 B1**
(45) Date of publication and mention of the grant of the patent: **09.11.2005**
(21) Application number: 02026388.5
(22) Date of filing: 25.11.2002
(51) Int. Cl.: B60R 21/20

(54) **Airbag module**
Airbag Modul
Mdule d'airbag

(30) Priority: 23.11.2001 DE 10157440
(43) Date of publication of application: 28.05.2003
(73) Proprietor: KEY SAFETY SYSTEMS, INC., Sterling Heights, Michigan 48314 (US)
(72) Inventor: Jost, Markus, 65439 Flörsheim a.M. (DE); Grosch, Michael, 55218 Ingelheim (DE); Szceburek, Frank, 63505 Langenselbold (DE); Munsch, Detlef, 65189 Wiesbaden (DE); Stich, Burkhard, 55411 Bingen (DE)
(74) Representative: Müller-Boré & Partner Patentanwälte

(56) References cited:
- DE-U- 20 106 695
- US-A- 5 620 201
- US-A- 6 056 315
- US-A1- 2001 005 075
- US-B1- 6 283 497

## Description

The present invention relates to an airbag module having a housing as described in the preamble of claim 1.

Airbag modules, which substantially comprise a housing as well as a cover with a folded airbag disposed in the housing and at least one inflator, are assembled before being mounted on or in a vehicle. The airbag modules then have to be fastened to the specially provided point in the vehicle such that, on the one hand, reliable support is guaranteed and, on the other hand, in the event of deployment of the airbag the airbag module remains at the specially provided point in the vehicle and only releases the airbag. As a result, the fastening of the airbag modules in the vehicle has to meet high standards.

Should an airbag module be mounted for example in the steering wheel of a vehicle, additional fastening means are necessary in order to be able to mount the airbag module securely on the steering wheel armature. It is known to screw-fasten the airbag module to the steering wheel armature or to a movable horn plate by means of nuts fastened in the module housing and separate screws. Said screw fastening may also be effected conversely in that bolts or screws fixed in the airbag module are then screw-fastened by means of a separate nut. Separate leg springs or snap rings are also used, which cooperate with latching hooks or other suitable components additionally provided on the airbag module. Thus, for mounting the airbag module on a part of the vehicle it has hitherto always been necessary to provide additional elements on the airbag module.

As an example, US-A-6,056,315, defining the preamble of claim 1, relates to an arrangement for attaching a vehicle safety restraint airbag cover to a housing, wherein the arrangement comprises an airbag housing having an internal space for receiving an airbag and a side wall having at least one raised catch member, wherein the airbag cover having a hinge member in which is formed at least one aperture through which the catch member extends, and an inflator mounting bracket having a base wall which is arranged adjacent and parallel to the base of the housing, a side wall which is arranged to extent parallel to the side wall of the housing and to sandwich the hinge member of the cover between the bracket and the housing side wall.

US-A-5,620,201 relates to a removable snap-in airbag module mounting system for mounting an airbag module within a mounting recess of a motor vehicle, wherein the system comprises a module housing of the airbag module and a hub plate in the mounting recess for supporting the module housing, wherein a first mounting latch mechanism is secured to the module housing and has a biased retractable latch that retracts to slide along a first upright of the hub plate and bias outwardly again to engage a first slot defined by the first upright.

US 2001/005075 A1 relates to a vehicle occupant restraint system comprising a gas bag module which has a front side, a side face and a rear side, wherein the gas bag module further comprises a pot-shaped module cover having a first peripheral wall and an accommodation housing a second peripheral wall.

The object of the invention is to provide an airbag module having a housing, with which the arrangement of the airbag module is mounted in a simple manner but with the necessary security on or in a vehicle. Said object is achieved by an airbag module having a housing of the type indicated in claim 1.

First of all, the proposed housing for an airbag module eliminates the need for separate parts for fastening the airbag module because the latching or snap-action device is provided on the airbag module itself, i.e. on the housing or base plate of the latter, as an integral component. This not only cuts down cost because there are fewer individual parts but also reduces the weight of the airbag module. A further result is an optimum utilisation of installation space. By integrating the latching device in the airbag module a latching or snapping into place of the airbag module, for example in the steering wheel of a vehicle, is effected without additional components and, what is more, no special tools are required for installation or removal. By virtue of the latching device being integrated in the airbag module the latching device is moreover captively connected to the airbag module. It is self-evident that the latching device is designed to be indestructible and reusable as often as desired, so that the airbag module where necessary, for example for substitute servicing or other requirements, may easily be removed from the vehicle without impairing the function of the latching device. The airbag module is in said case mounted merely by means of the latching device on the appropriate part of the vehicle.

The latching device takes the form of elastically movable spring elements or spring clips, which preferentially return to their starting position wherein the spring elements are subjected to compressive stress when the airbag module is activated. The spring elements in said case enable easy insertion of the airbag module at the specially provided point, whereby through suitable development of the latching devices corresponding with the spring elements an easy insertion may be enabled in that the spring elements or spring clips are moved away during insertion and then return to their starting position after they have latched or snapped into place at the specially provided point.

The latching device of the airbag module cooperates with parts of the vehicle such as, for example, latching lugs and/or latching openings for the purpose of latching of the airbag module to the appropriate part of the vehicle, in that the latching device of the airbag module engages behind or around and/or projects into the appropriate latching lugs and/or latching openings. Thus, on the vehicle too it is possible to dispense with additional components for the purpose of arranging the airbag, wherein the vehicle-side latching devices may easily be taken into consideration when manufacturing the appropriate parts of the vehicle, for example the steering wheel, and provided in one working cycle without much extra outlay. The latching device on the vehicle is provided as a rigid component so the latching device disposed on the airbag module may engage behind or around or project into the suitably rigid parts.

The latching device of the airbag module, for the purpose of removal of the latter after it has been installed in the vehicle, is designed with parts which are movable away from or out of the vehicle-side latching devices. Said development enables rapid removal of the airbag module, wherein as a result of the development of the latching device of the airbag module the removal of the latter from the vehicle no longer entails the use of special tools. Furthermore, the latching device may be disposed on the airbag module in such a way that easy access to the latching devices after installation of the airbag module may be guaranteed.

The latching device of the airbag module may take the form of spring elements, for example in the form of tongues, which are formed on and project outwards from the side walls of the airbag module and behind the free ends of which a corresponding vehicle-side latching device, for example in the form of latching lugs, engages. The side walls of the airbag are usually made of a plastic material, wherein their manufacture may be effected for example by injection moulding. In said case, it is easily possible to provide regions in the side walls of the airbag module with slots extending in a U-shaped manner and to design the part of the side walls bounded by the U-shaped region in such a way that said part projects outwards and may therefore serve as a latching tongue. The stability of the latching tongues manufactured is in said case designed such that the airbag module upon deployment of the airbag remains at the specially provided point, i.e. the outwardly projecting spring elements are so designed that they may absorb the occurring forces without being destroyed and the airbag module remains at the specially provided point.

It may however also be advantageous to form the latching device additionally or exclusively on the base plate of the airbag module, namely by means of spring elements, which extend substantially vertically away and which are then an integral part of the base plate. As the base plate, which is generally used for arrangement of the inflator, will usually be made of metal, the latching device formed from parts of the base plate presents the required material stability. As in the case of the spring elements formed in the side walls, the spring elements formed in the region of the base plate are also easy and therefore very inexpensive to manufacture.

It is particularly advantageous when the spring elements of the airbag module have recesses or openings, into which vehicle-side latching devices, for example in the form of latching lugs, engage in order to mount the airbag in a positionally secure manner on the vehicle. Said style of construction of the spring elements is also inexpensive to manufacture and presents a high degree of security with regard to the connection between airbag module and vehicle.

In an advantageous manner the latching device, for example in the form of spring elements, disposed on the base plate may take the form of regions or parts bent away from the free edge of the base plate, which merely involves slitting and then bending away the specific regions, a process which is likewise easy and inexpensive to effect.

For the situation where the base plate of the airbag module has an opening, for example for arrangement of the inflator and/or a diffuser, the latching device formed on the base plate and for example in the form of spring elements may comprise parts bent away from the region delimiting the opening of the base plate, and this is likewise easy to effect.

Where the latching device of the airbag module, for example in the form of a spring element, is made of metal and is a part of the base plate of the airbag module, the spring elements are preferably coated with a plastic material in order, for example, to enable even better compensation of tolerances and also to prevent possible noise development after installation of the airbag module.

With a suitably developed housing, comprising the side walls and the base plate, an airbag module may be provided, which additionally comprises at least one folded airbag, an inflator and a cover for closing the housing, wherein an airbag module thus developed may be easily, quickly and inexpensively fastened on or in the vehicle and removed again but at the same time, in the event of deployment of the airbag, remains securely at the specially provided point.

In a corresponding manner steering wheels for vehicles may be provided which enable an arrangement of an airbag module, wherein the airbag module comprises a housing of a corresponding design and hence the described latching device, wherein the steering wheel has latching lugs and/or latching openings for cooperation with the latching device of the airbag module.

An airbag module designed in the described manner may be mounted on or in a vehicle into its designated position provided on the vehicle quickly and without having to use special tools by placing the airbag module, which comprises at least the side walls, the base plate, the inflator and the airbag, at the specially provided point of the vehicle and moving it further substantially in the direction of travel into its intended end position, wherein the latching device of the airbag module then snaps into place or latches with the vehicle-side latching devices, for example in the form of latching lugs or latching openings, provided on the vehicle, for example on the steering wheel armature.

In a simple manner the airbag module may then be removed from its vehicle-side end position by moving or bending the latching device of the airbag module away from the vehicle-side latching device and then removing the airbag module from its end position. In said case also, it is not necessary to use special tools.

There now follows a more detailed description of the invention with reference to preferred embodiments. In the drawings:
Fig. 1 is a perspective view of a latching device according to the invention of an airbag module mounted on a steering wheel armature;
Figs. 2a to 2c are diagrammatic views of insertion of the airbag module according to Fig. 1 into a steering wheel armature;
Fig. 3 is a perspective view of a base plate of an airbag module with a latching device which is not covered by the invention; and
Fig. 4 is a perspective view of a base plate with an alternative development of the latching device which is not covered by the invention.

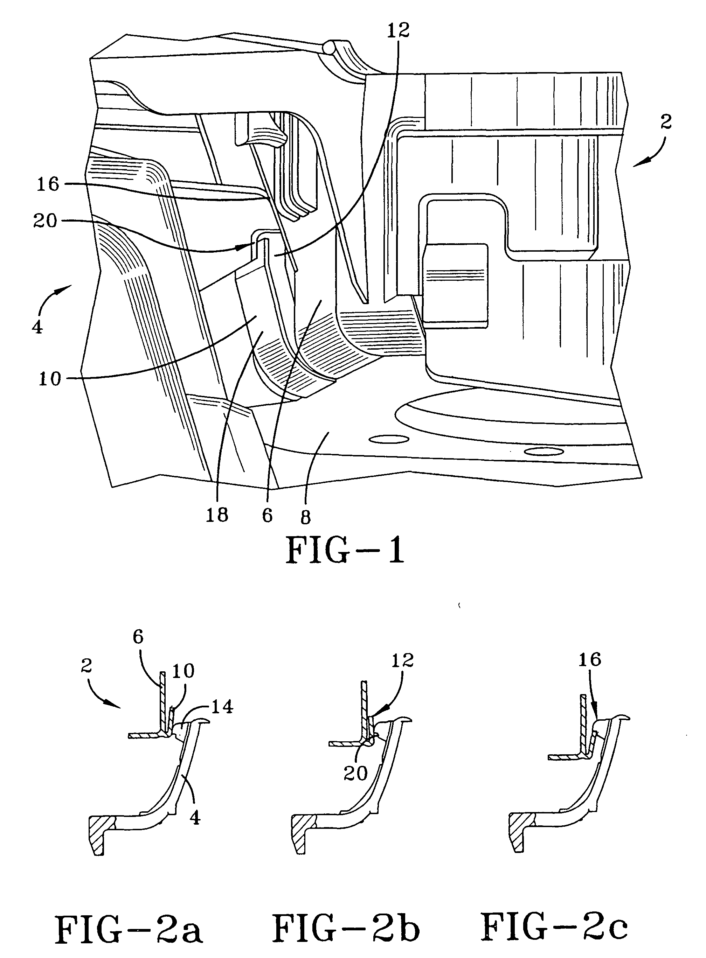

Fig. 1 shows in a perspective view a part of an airbag module 2 of the type mounted in the steering wheel armature of a steering wheel 4. The housing of the airbag module 2 comprises side walls 6 and a base plate 8. Formed in a region of the side wall 6 is a latching device in the form of a spring element or of a spring clip 10. Said spring clip 10 is an integral component of the side wall 6 and is formed simultaneously with manufacture of the housing for the airbag module 2 in that a region of the side wall 6 is designed to stand away from the latter. This forms the spring clip 10, which is directed out from the side wall 6 and which in its lower region is connected to the side wall 6 and the upper region of which has a free end 12. It is in said case self-evident that the airbag module has a plurality of spring clips 10 disposed in the side walls 6.

On the steering wheel 4 latching devices in the form of a latching lug 14, which may also be described as the airbag module anchoring, are provided and cooperate with the latching device of the airbag module 2 in the form of the spring clip 10. The latching lug 14 is chamfered in the direction of insertion of the airbag module - i.e. in Fig. 1 in a downward direction - so that the latching lug 14 at its free end directed towards the airbag module 2 has a ramp 16. The latching lug 14 is shaped in such a way that it has, in the direction of insertion of the airbag module 2, its shortest extension at the beginning, viewed in the direction of the steering wheel centre. The slope of the ramp 16 is therefore directed towards the steering wheel centre. As the airbag module 2 is inserted, the outer region 18 of the spring clip 10 directed towards the latching lug 14 slides along the ramp 16 and, because of the slope of the ramp 16, is in the course of insertion pressed away in the direction of the housing wall 6. Owing to the elastic design of the spring clip 10 this is possible in a non-destructive manner. The airbag module 2 is inserted until the free end 12 of the spring clip 10 has reached the end of the ramp 16 and may once more move outwards, away from the housing side wall, before jamming underneath the latching lug 14. To limit the movement of the spring clip 10 away from the side wall 6, the end of the ramp 16 of the latching lug 14 has a boundary wall 20, against which the outer region 18 of the free end 12 of the spring clip 10 comes to rest. Thus, the free end of the spring clip 10 engages below the latching lug 14 at the end of the ramp 16 and therefore fixes the airbag module 2 in its end position. As may be seen, for insertion of the airbag module it is not necessary to use additional fastening means or to employ special tools. The airbag module 2 merely has to be moved in the direction of insertion until the spring clips 10 engage in a clamping manner under the corresponding latching lugs 14. Nor, when an airbag housing developed in said manner is removed, are special tools required; rather, a simple screwdriver or similar devices may be used to press the spring clips 10 in towards the housing wall 6 before then removing the airbag module from the steering wheel 4.

The process, just described, of installing the airbag module 2 into a steering wheel armature is once more diagrammatically illustrated in individual stages in Figs. 2a to 2c. In Fig. 2a the spring clip 10 during insertion is positioned for the first time against the latching lug 14 of the steering wheel 4. As the airbag module 2 in said position comes with the spring clips 10 for the first time into abutment with the latching lugs 14, the spring clips 10 have not yet been bent away in the direction of the housing wall 6. Said state, in which the spring clips 10 are bent away as a result of further insertion of the airbag module 2 into the steering wheel 4, is shown in Fig. 2b. Fig. 2c then shows how the free end 12 of the spring clip 10 has reached the end of the ramp 16 and because of springing-back of the latching lug 14 at the end of the ramp 16 may move back out, away from the housing wall 6. Moving away is however possible only until the outer region of the spring clip 10 in the region of its free end 12 has reached the boundary wall 20 of the latching lug 14.

In said development, upon deployment of the airbag the spring clips 10 are subjected to compressive stress in that the free ends 12 of the spring clips 10 are supported against the offset of the latching lug 14 and therefore upset the spring clip 10, i.e. subject it to compressive stress.

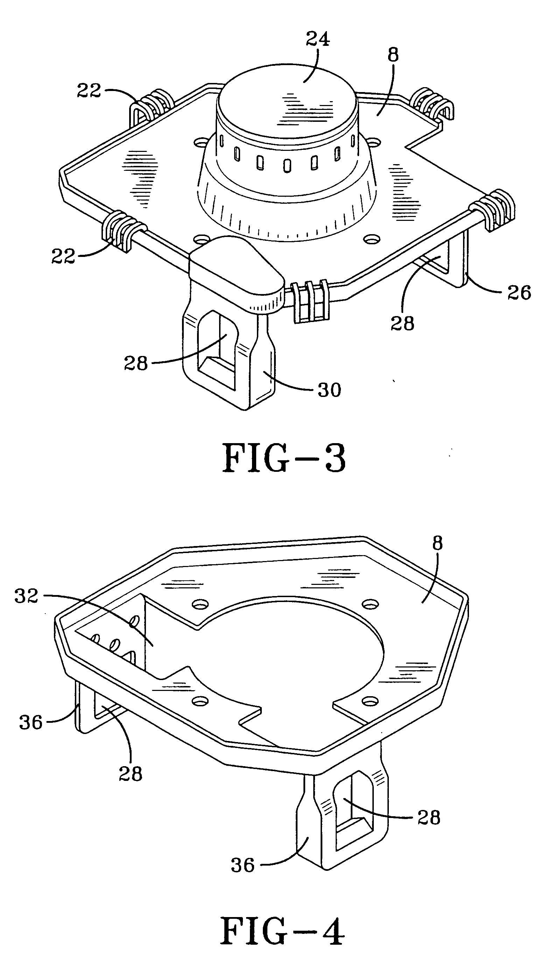

Fig. 3 shows another development of the latching device of an airbag module which is not covered by the invention, namely in the region of the base plate 8 of the airbag module. It is self-evident that the latching devices illustrated here may be provided on an airbag module in addition to the latching devices according to Fig. 1 or alternatively as a single latching device of the airbag module. The base plate 8 is shown without any connection to the side walls of the airbag module. The hooks 22, which project out from the outer edge of the base plate 8 and are directed downwards, are used to fasten the airbag. Disposed in the middle of the base plate 8 is a diffuser 24. Provided at the outer edge of the base plate 8 are latching devices in the form of spring clips 26, 30, which extend away from the base plate - in Fig. 3 in a downward direction, i.e. in the direction of insertion of the airbag module or opposite the cover of the airbag module (not shown here). The spring clips 26, 30 are an integral part of the base plate 8 and are produced by bending away a region at the outside edge of the base plate 8 in a downward direction. The illustrated spring clip 26 has an opening 28 surrounded by the material of the spring clip 26. In order to avoid tolerances or also noises in the region of the spring clip 26 when the latter is fastened on or in the vehicle, the spring clip 26 may also be coated with a plastic material, as is illustrated for the spring clip 30, wherein the coating is designed such that the opening 28 is retained. The spring clips 26, 30 may then cooperate with latching lugs disposed on the vehicle side, in particular on the steering wheel armature, in that the free ends of the latching lugs engage into the openings 28, wherein the latching lugs (not shown here) may in a corresponding manner be provided with a ramp of the type shown in Figs. 1 and 2. Because of a ramp-like design of the corresponding latching devices on the steering wheel armature the spring clips 26, 30 may be pressed away, for example in toward the middle of the base plate 8, before then snapping in their end position over the latching lugs, fastening themselves in a positionally secure manner on the latter and ensuring reliable positioning of the airbag module.

Fig. 4 likewise shows a base plate 8 of a non-illustrated airbag module, wherein the base plate 8 has a central opening 32, into which or at which an inflator is subsequently disposed. The construction of the latching device of the base plate 8 in the form of spring elements 34, 36 corresponds to the development of the spring clips 26, 30 of Fig. 3, wherein the spring clip 34 is shown without a plastic coating, while the spring clip 36 has a plastic coating. Both spring clips 34, 36 have the opening 28 for engagement of the vehicle-side latching devices. Said form of construction differs from that of Fig. 3 in that the spring clips 34, 36 are formed from the inner periphery of the opening 32 downwards, i.e. in the direction of insertion of the airbag module. Just as in Fig. 3, the spring clips 34, 36 are subjected to tensile stress in the event of deployment of the airbag.

## Claims

1. An airbag module mountable on a part of a vehicle, in particular on a steering wheel (4), having a housing that comprises side walls (6), a base plate (8), on which an inflator is mounted, as well as a cover plate mounted on the free ends of the side walls (6) for closing the airbag module (2), wherein the housing is provided with a latching or snap-action device (10; 26, 30; 34, 36) for the latching arrangement of the airbag module (2),
wherein the latching device (10; 26, 30; 34, 36) is formed as an integral part of the housing on the side walls (6) and/or on the base plate (8) of the housing such that the airbag module (2) is mountable merely by means of the latching device (10; 26, 30; 34, 36) in a captive manner on said part of the vehicle, and
wherein the latching device has the form of elastically movable spring elements or spring clips (10; 26, 30; 34, 36), which return to their starting position, **characterized in that**
free ends (12) of the spring elements (10) are supportable on said part of the vehicle, and oriented substantially in the deployment direction of the airbag, so that the spring elements (10) are subjected to compressive stress when the airbag module is activated.

2. An airbag module according to claim 1, **characterised in that** the latching device (10; 26, 30; 34, 36) cooperates with parts of the vehicle in the form of latching lugs (14) and/or latching openings for latching the airbag module (2) to the vehicle **in that** the latching device engages behind, engages around and/or projects into the latching lugs (14) and/or latching openings.

3. An airbag module according to any one of claims 1 to 2, **characterised in that** the latching device (10; 26, 30; 34, 36), for removal of the airbag module (2) mounted on the vehicle, is movable away from or out of the latching lugs (14) or latching openings.

4. An airbag module according to any one of claims 1 to 3, **characterised in that** the latching device takes the form of spring elements (10), which are formed on the side walls (6) of the airbag module (2) and project outwards from the latter, the free ends (12) of which engage behind corresponding latching lugs (14) mounted on the vehicle.

5. An airbag module according to claim 4, **characterised in that** the spring elements (26, 30; 34, 36) have recesses or openings (28), into which latching lugs disposed on the vehicle engage.

6. An airbag module according to any one of the preceding claims, **characterised in that** the base plate (8) has an opening (32) for arrangement of the inflator and/or of a diffuser.

7. An airbag module according to one of claims 1 to 6, further comprising at least one airbag and a cover for closing the housing.

## Patentansprüche

1. Airbagmodul, welches an einem Teil eines Fahrzeugs, insbesondere einem Lenrad (4) montierbar ist, mit einem Gehäuse, welches Seitenwandungen (6), eine Bodenplatte (8), an welcher ein Gasgenerator angeordnet ist, sowie eine an den freien Enden der Seitenwandungen (6) angeordnete Abdeckplatte zum Verschließen des Airbagmoduls (2) aufweist, wobei das Gehäuse mit einer Rast- oder Schnappeinrichtung (10; 26, 30; 34, 36) zum verrastenden Anordnen des Airbagmoduls (2) versehen ist, wobei die Rasteinrichtung (10; 26, 30; 34, 36) als ein integraler Teil des Gehäuses an den Seitenwandungen (6) und/oder an der Bodenplatte (8) des Gehäuses so ausgebildet ist, daß das Airbagmodul (2) lediglich über die Rasteinrichtung (10; 26, 30; 34, 36) an dem entsprechenden Teil des Fahrzeuges unverlierbar anordenbar ist und wobei die Rasteinrichtung als elastisch bewegbare Federelemente oder Federlaschen (10; 26, 30; 34, 36) ausgebildet ist, welche ihre Ausgangslage zurückkehren,
**dadurch gekennzeichnet, daß** freie Enden (12) der Federelemente (10) an dem Teil des Fahrzeugs abstützbar sind und im wesentlichen in der Auslöserichtung des Gassacks orientiert sind, so daß die Federelemente (10) beim Auslösen des Airbags auf Druck beansprucht werden.

2. Gehäuse nach Anspruch 1, **dadurch gekennzeichnet, daß** die Rasteinrichtung (10; 26, 30; 34, 36) mit als Rastnasen (14) und/oder - öffnungen ausgebildeten Teilen des Fahrzeuges zum Verrasten des Airbagmoduls (2) am Fahrzeug zusammenwirkt, indem die Rasteinrichtung die Rastnasen (14) und/oder - öffnungen hintergreift, umgreift und/oder in diese hineinragt.

3. Gehäuse nach Anspruch 1 oder, **dadurch gekennzeichnet, daß** die Rasteinrichtung (10; 26, 30; 34, 36) zum Entfernen des am Fahrzeug angeordneten Airbagmoduls (2) von den Rastnasen (14) oder -öffnungen wegbewegbar bzw. herausbewegbar ausgebildet ist.

4. Gehäuse nach einem der Ansprüche 1 bis 3, **dadurch gekennzeichnet, daß** die Rasteinrichtung als an die Seitenwandungen (6) des Airbagmoduls (2) angeformte, von diesen nach außen wegstehende Federelemente (10) ausgebildet sind, wobei deren freie Enden (12) entsprechende am Fahrzeug angeordnete Rastnasen (14) hintergreifen.

5. Gehäuse nach Anspruch 4, **dadurch gekennzeichnet, daß** die Federelemente (26, 30; 34, 36) Ausnehmungen oder Öffnungen (28) aufweisen, in die am Fahrzeug angeordnete Rastnasen eingreifen.

6. Gehäuse nach einem der vorhergehenden Ansprüche, **dadurch gekennzeichnet, daß** die Bodenplatte (8) eine Öffnung (32) zum Anordnen des Gasgenerators und/oder eines Diffusors aufweist.

7. Airbagmodul nach einem der Ansprüche 1 bis 6, umfassend wenigstens einen Airbag und eine das Gehäuse verschließende Abdeckung.

## Revendications

1. Module de coussin d'air pouvant être monté sur une partie d'un véhicule, en particulier un volant de direction (4), comportant un boîtier comprenant des parois latérales (6), une plaque de base (8) sur laquelle est monté un dispositif de gonflement, ainsi qu'une plaque de couverture montée sur les extrémités libres des parois latérales (6) pour fermer le module de coussin d'air (2), le boîtier comportant un dispositif de verrouillage ou d'encliquetage (10; 26; 30 ; 34, 36) pour le dispositif de verrouillage du module de coussin d'air (2),
le dispositif de verrouillage (10; 26; 30 ;34, 36) faisant partie intégrante du boîtier sur les parois latérales (6) et /ou sur la plaque de base (8) du boîtier, de sorte que le module de coussin d'air (2) peut être monté uniquement par l'intermédiaire du dispositif de verrouillage (10; 26; 30 ; 34, 36), revenant vers leur position de départ,
le dispositif de verrouillage étant formé en éléments de ressorts élastiques mobiles ou en pinces à ressort (10; 26; 30 ; 34, 36), qui rentrent à leur position de départ, **caractérisé en ce que**
les extrémités libres (12) des éléments de ressort (10) peuvent être supportées sur ladite partie du véhicule et sont orientées pratiquement dans la direction du déploiement du coussin d'air, de sorte que les éléments de ressort (10) sont soumis à une contrainte de compression lors de l'actionnement du module de coussin d'air.

2. Module de coussin d'air selon la revendication 1, **caractérisé en ce que** le dispositif de verrouillage (10; 26; 30; 34, 36) coopère ave des éléments du véhicule sous forme de pattes de verrouillage (14) et/ou des ouvertures de verrouillage pour verrouiller le module de coussin d'air (2) sur le véhicule, le dispositif de verrouillage s'engageant derrière, atour et/ou débordant dans les pattes de verrouillage (14) et /ou les ouvertures de verrouillage.

3. Module de coussin d'air selon l'une quelconque des revendications 1 à 2, **caractérisé en ce que** le dispositif de verrouillage (10; 26, 30; 34, 36) peut être déplacé à l'écart ou hors des pattes de verrouillage (14) ou des ouvertures de verrouillage en vue du retrait du module de coussin d'air (2) monté sur le véhicule.

4. Module de coussin d'air selon l'une quelconque des revendications 1 à 3, **caractérisé en ce que** le dispositif de verrouillage a la forme d'éléments de ressort (10) formés sur les parois latérales (6) du module de coussin d'air (2) et débordant vers l'extérieur de ce dernier, les extrémités libres correspondantes (12) s'engageant derrière des pattes de verrouillage correspondantes (14) montées sur le véhicule.

5. Module de coussin d'air selon la revendication 4, **caractérisé en ce que** les éléments de ressort (26, 30; 34, 36) comportent des évidements ou des ouvertures (28), dans lesquels s'engagent les pattes de verrouillage agencées sur le véhicule.

6. Module de coussin d'air selon l'une quelconque des revendications précédentes, **caractérisé en ce que** la plaque de base (8) comporte une ouverture (32) pour l'agencement du dispositif de gonflement et/ou d'un diffuseur.

7. Module de coussin d'air selon l'une quelconque des revendications 1 à 6, comprenant en outre au moins un coussin d'air et un couvercle pour fermer le boîtier.
